# EUROPEAN PATENT APPLICATION

(11) **EP 1 594 151 A2**
(43) Date of publication of application: **09.11.2005**
(21) Application number: 05252757.9
(22) Date of filing: 04.05.2005
(51) Int. Cl.: H01J 9/02, H01J 1/304

(54) **Method of manufacturing carbon nanotube field emission device**

(30) Priority: 06.05.2004 KR 2004031670
(71) Applicant: SAMSUNG ELECTRONICS CO., LTD., Suwon-si, Gyeonggi-do (KR)
(72) Inventor: Jeong, Tae-won, Seoul (KR); Lee, Jeong-hee, 713-1002 Tap Maeul Gyeongnam Apt, Seongnam-si Gyeonggi-do (KR); Huh, Jeong-na, Samsung Adv. Inst. of Technology, Yongin-si Gyeonggi-do (KR)
(74) Representative: Greene, Simon Kenneth

(57) **Abstract**

Provided are a carbon nanotube emitter and a method of manufacturing a carbon nanotube field emission device using the carbon nanotube emitter. Powdered carbon nanotubes are adsorbed onto a first substrate. A metal is deposited on the carbon nanotubes. The resultant structure is pressure-bonded to a surface of a cathode. The first substrate is spaced apart from a second substrate to tense the carbon nanotubes, so that the carbon nanotubes are perpendicular to the first substrate.

## Description

The present invention relates to a method of manufacturing a carbon nanotube (CNT) field emission device, and more particularly, to a method of manufacturing a field emission device in which a thermal impact caused by a high temperature process is reduced.

Carbon nanotubes (CNTs) are widely used as field emitters for backlights used in field emission displays (FEDs) and liquid crystal displays (LCDs). Such CNTs have good electron emission characteristics and chemical and mechanical durability. The properties and applications of such CNTs have been studied.

Conventional field emitters are typically micro tips made of a metal such as molybdenum (Mo). However, the life span of such a micro tip is shortened due to effects of an atmospheric gas, a non-uniform electric field, and the like. Also, the work function of the micro tip must be reduced to drive the micro tip at a low voltage. However, there is a limit to reducing the work function. To solve these problems, CNTs having a high aspect ratio, high durability, and high conductivity are preferably adopted as field emitters.

In order to obtain a high current density from CNT emitters, CNTs must be uniformly distributed and be arranged perpendicularly to a substrate. In particular, the CNTs must electrically contact the substrate (or a cathode) such that all of the CNTs emit electrons.

The CNT emitters are generally grown from the substrate using chemical vapor deposition (CVD). However, the CNT emitters may be manufactured using a paste obtained by combining CNTs with a resin. This method is easier and less costly than CVD and thus preferred to CVD.

U.S. Pat. No 6,339,281 discloses a field emitter array using a CNT paste and a method of fabricating the same. U.S. Pat. No. 6,440,761 discloses a field emission array using CNTs obtained using a growing method and a method of fabricating the same.

CNTs are generally grown from a substrate using CVD. Here, CVD is performed at a high temperature of more than 500°C to increase the purity of the CNTs. Thus, a thermal impact on the substrate or a structure on the substrate is inevitable during CVD. When the CVD is performed at a low temperature, the purity of the CNTs is reduced. Therefore, CVD at a low temperature is not preferable. Furthermore, CVD equipment used for obtaining highly pure CNTs is high-priced, and thus CVD has a high manufacturing cost.

A CNT paste can be coated on a substrate (or a cathode) using screen printing, photolithography, or the like. Since the CNT paste includes various kinds of organic and inorganic solvents, it is difficult to obtain highly pure CNT electron emitters.

According to an aspect of the present invention, there is provided a method of manufacturing carbon nanotube emitters, including: adsorbing powdered carbon nanotubes onto a first substrate; depositing a metal on carbon nanotubes to form a first metal layer on a stack of the carbon nanotubes; forming a second metal layer on a second substrate; pressure-bonding the first metal layer on the first substrate to the second metal layer on the second substrate; spacing the first substrate apart from the second substrate to tense the carbon nanotubes that are bonded to the second substrate by the first and second metal layers; and further spacing the first substrate apart from the second substrate to separate the carbon nanotubes from the first substrate.

According to another aspect of the present invention, there is provided a method of manufacturing carbon nanotube emitters, including: adsorbing powdered carbon nanotubes onto a first substrate; forming a second metal layer on a second substrate; forming a first metal layer, which is bonded to the carbon nanotubes, in a predetermined pattern on the second metal layer; pressurizing the carbon nanotubes on the first substrate to bond the carbon nanotubes to the first metal layer on the second substrate; spacing the first substrate apart from the second substrate to tense the carbon nanotubes that are bonded to the second substrate by the first metal layer; and further spacing the first substrate from the second substrate to separate the carbon nanotubes from the first substrate.

According to still another aspect of the present invention, there is provided a method of manufacturing a carbon nanotube field emission device including a front plate including an inside surface on which an anode is formed, a rear plate which is spaced apart from the front plate and includes an inside surface on which a cathode is formed, and electron emitters which are formed of carbon nanotubes on the cathode. The method includes: forming the cathode on the inside surface of the rear plate; adsorbing powdered carbon nanotubes facing the cathode onto an additional stamp substrate; depositing a metal on the carbon nanotubes to form a first metal layer on the carbon nanotubes; pressure-bonding the first metal layer on the stamp substrate to the cathode on the rear plate; spacing the stamp substrate from the rear plate to tense the carbon nanotubes that are bonded to the cathode on the rear plate by the first metal layer and a second metal layer; and further spacing the stamp substrate from the rear plate to separate the carbon nanotubes from the stamp substrate.

According to yet another aspect of the present invention, there is provided a method of manufacturing a carbon nanotube field emission device including a front plate including an inside surface on which an anode is formed, a rear plate which is spared apart from the front plate and includes an inside surface on which a cathode is formed, and an electron emitter formed by carbon nanotubes on the cathode. The method includes: forming the cathode on the inside surface of the rear plate; forming a metallic bonding layer for bonding the carbon nanotubes on the cathode; adsorbing powdered carbon nanotubes facing the cathode onto an additional stamp substrate; pressure-bonding the carbon nanotubes on the stamp substrate to the metallic bonding layer on the cathode of the rear plate; spacing the stamp substrate from the rear plate to tense the carbon nanotubes that are bonded to the cathode on the rear plate by the first metal layer; and further spacing the stamp substrate from the rear plate to separate the carbon nanotubes from the stamp substrate.

The adsorption of the carbon nanotubes onto the stamp substrate includes:
mixing the powdered carbon nanotubes with a liquid dispersing agent; coating the stamp substrate with the dispersed carbon nanotubes; and removing the liquid dispersing agent to adsorb the carbon nanotubes onto the stamp substrate.

In the bonding, the second metal layer is heated together with the second substrate to a predetermined temperature to perform hot pressure bonding. As a result, carbon nanotubes can be efficiently bonded to the second substrate.

According to yet another aspect of the present invention, there is provided a method of manufacturing a carbon nanotube field emission device including a front plate including an inside surface on which an anode is formed, a rear plate which is spared apart from the front plate and includes an inside surface on which a cathode is formed, and electron emitters formed of carbon nanotubes on the cathode. The method includes: forming the cathode on the inside surface of the rear plate; adsorbing powdered carbon nanotubes facing the cathode onto an additional stamp substrate; depositing a metal on the carbon nanotubes dispersed on the stamp substrate to form a first metal layer on the carbon nanotubes; pressure-bonding the first metal layer on the stamp substrate to the cathode of the rear plate; spacing the stamp substrate from the rear plate to tense the carbon nanotubes that are bonded to the cathode on the rear plate by the first and second metal layers; and further spacing the stamp substrate from the rear plate to separate the carbon nanotubes from the stamp substrate.

The adsorption of the carbon nanotubes onto the first substrate or the stamp substrate includes: mixing the powdered carbon nanotubes with a liquid dispersing agent; coating the first substrate or the stamp substrate with the dispersed carbon nanotubes; and removing the liquid dispersing agent to adsorb the carbon nanotubes onto the first substrate or the stamp substrate. The liquid dispersing agent is an organic solvent, for example, ethanol, or an inorganic solvent such as water.

The present invention aims to provide CNT emitters having high purity and good electric characteristics and a method of manufacturing a device using the same.

The present invention also aims to provide CNT emitters with a simple manufacturing process and being capable of thermally protecting other components including a substrate, and a method of manufacturing a device using the same.

The above and other features and advantages of the present invention will become more apparent by describing in detail exemplary embodiments thereof with reference to the attached drawings in which:
FIGS 1A through 1l are cross-sectional views illustrating a method of manufacturing a field emission device according to an embodiment of the present invention;
FIG. 2A is a scanning electron microscope (SEM) image illustrating CNTs which were coated and dried on a stamp substrate that is a first substrate, using an organic dispersing agent, according to an embodiment of the present invention;
FIG. 2B is a SEM image illustrating CNT emitters, according to an embodiment of the present invention;
FIGS. 3A through 3F are cross-sectional views illustrating a method of manufacturing a field emission device, according to another embodiment of the present invention;
FIG. 4 is a SEM image illustrating a pattern of CNT emitters, according to an embodiment of the present invention;
FIGS. 5A through 5F are cross-sectional views illustrating a method of manufacturing a field emission device, according to still another embodiment of the present invention; and
FIG. 6 is a schematic cross-sectional view of an electronic device adopting a CNT field emission device according to an embodiment of the present invention.

Hereinafter, a method of manufacturing a CNT emitter and a method of manufacturing a field emission device adopting the CNT emitter according to embodiments of the present invention will be described in detail with reference to the attached drawings. In the drawings, a field emission device including CNTs is exaggerated for clarity. In particular, one element is illustrated larger than other elements when necessary.

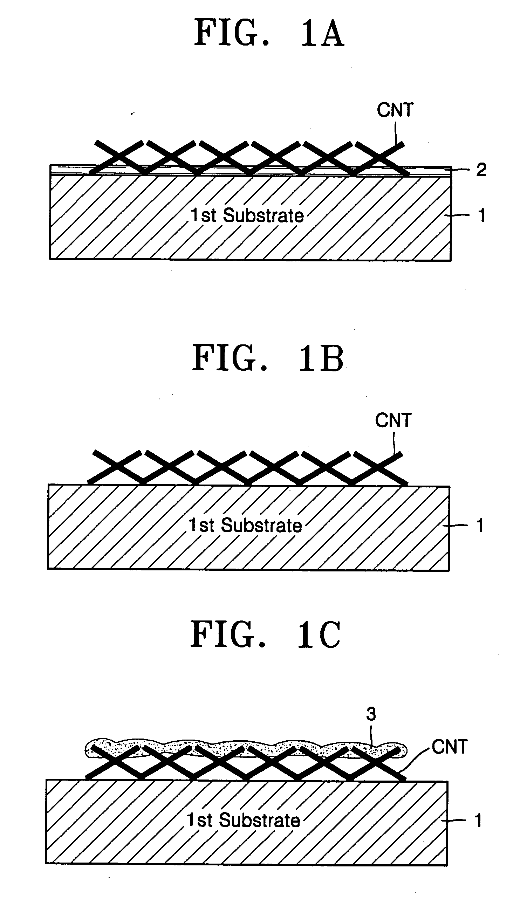

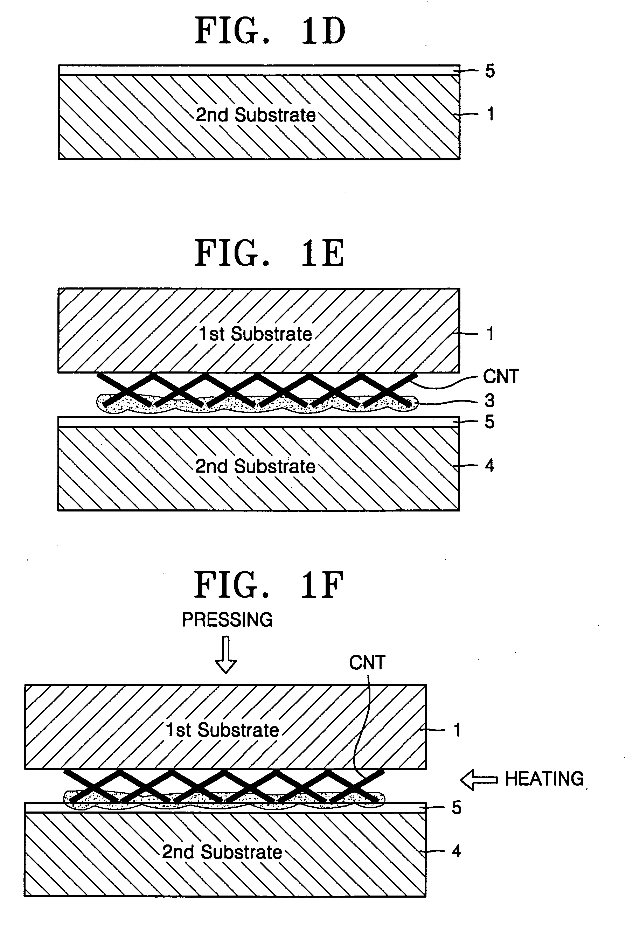

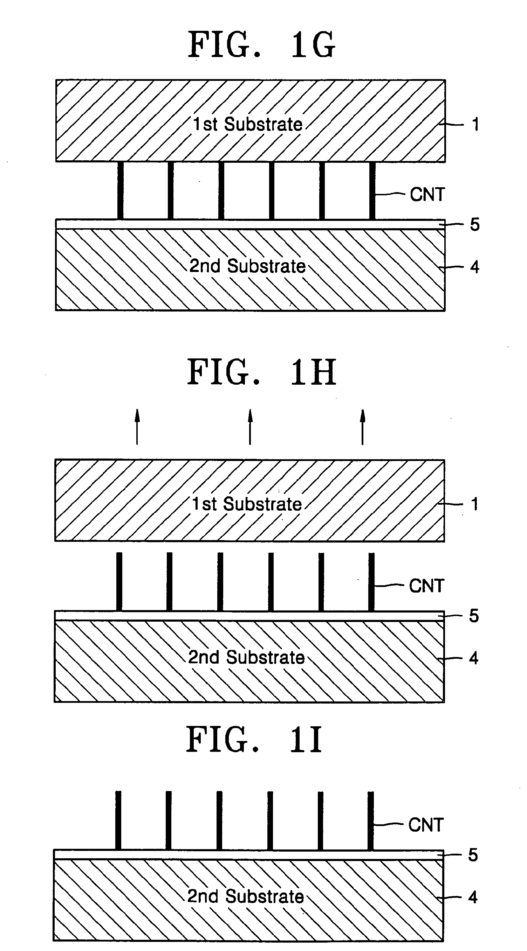

FIGS 1A through 1l are cross-sectional views illustrating a method of manufacturing a CNT emitter, according to an embodiment of the present invention.

As shown in FIG. 1A, CNT powder is mixed with a dispersing agent that is made as an organic solvent, for example, ethanol, or an inorganic dispersing agent, for example, water 2. Next, the mixture is coated on the surface of a first substrate 1 formed of Si or sodalime glass.

As shown in FIG. 1B, the dispersing agent 2 is removed by natural or forced drying so that only CNTs remain on the first substrate 1. Here, the CNTs are adsorbed on the first substrate 1 by Van der Waals force, i.e., a molecular force.

As shown in FIG. 1C, a first metal layer 3 for bonding is formed of Ag or the like on the surface of the CNTs to a predetermined thickness. Here, the first metal layer 3 is formed only on an upper portion of the CNTs by adjusting an amount of deposited metal.

As shown in FIG. 1D, a second substrate 4 is prepared, and then a second metal layer 5 is formed of Ag, Cu, or Ti on the surface of the second substrate 4. Here, the second substrate 4 is an element of a specific product according to an object to which the second substrate 4 is substantially applied. For example, when the second substrate 4 is applied to a field emission device, the second substrate 4 corresponds to a rear plate. In this case, the second metal layer 5 corresponds to a cathode of the field emission device. Thus, on the rear plate of the field emission device used in this step, i.e., the second substrate 4 of the present embodiment, a cathode of pattern the field emission device requires may be prepared. If necessary, a gate insulating layer and a gate electrode may be formed on the rear plate or may not. In the present embodiment, the gate insulating layer and the gate electrode may be omitted regardless of whether they are formed or not.

As shown in FIG. 1 E, the first substrate 1 is turned upside down so that the CNTs contact an upper surface of the second substrate 4. Here, the second metal layer 5 of the second substrate 4 contacts the CNTs on the first substrate 1.

As shown in FIG. 1 F, the first substrate 1 is pressed against the second substrate 4 to pressure-bond the first metal layer 3 on the CNTs to the second metal layer 5 on the surface of the second substrate 4. Heat is applied to the first and second metal layers 3 and 5 to achieve efficient hot pressure-bonding. The CNTs on which the first metal layer 3 is formed are strongly bonded to the second metal layer 5 due to pressure-bonding, particularly, hot pressure bonding. Here, a general presser is used as a presser for bonding.

As shown in FIG. 1 G, the first substrate 1 is perpendicularly spaced apart from the second substrate 4 to tense the CNTs therebetween, thereby causing the CNTs to be perpendicular to the second substrate 4.

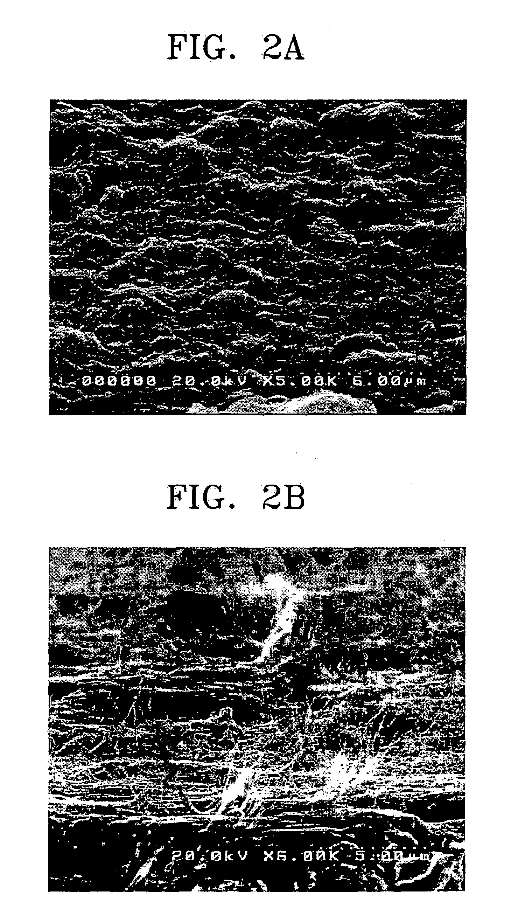

FIG. 2A is a SEM image illustrating CNTs which were coated on a first substrate or a stamp substrate along with a dispersing agent and then are dried. Here, the CNTs correspond to the CNTs of FIG. 1B.

FIG. 2B is a SEM image illustrating CNT emitters that were substantially manufactured from the first substrate of FIG. 2A. The CNT emitters of FIG. 2B include a Ti metal layer formed as a cathode on a silicon substrate and CNTs bonded to the Ti metal layer by Ag. The Ti and Ag metal layers each have a thickness of 1000 to 2000 A. During bonding, a pressure of about 3MPa is applied for about 60 to 270 seconds, and a temperature is adjusted to about 300°C. As shown in FIGS. 2A and 2B, the CNTs are perpendicular to the first substrate. Thus, CNTs can be manufactured perpendicular to a substrate without being grown from the substrate.

The above-described processes have been described regardless of the shape of the CNT emitters. However, substantial CNT emitters must have a predetermined shape and size, and thus a method of manufacturing such a CNT emitter must be proposed.

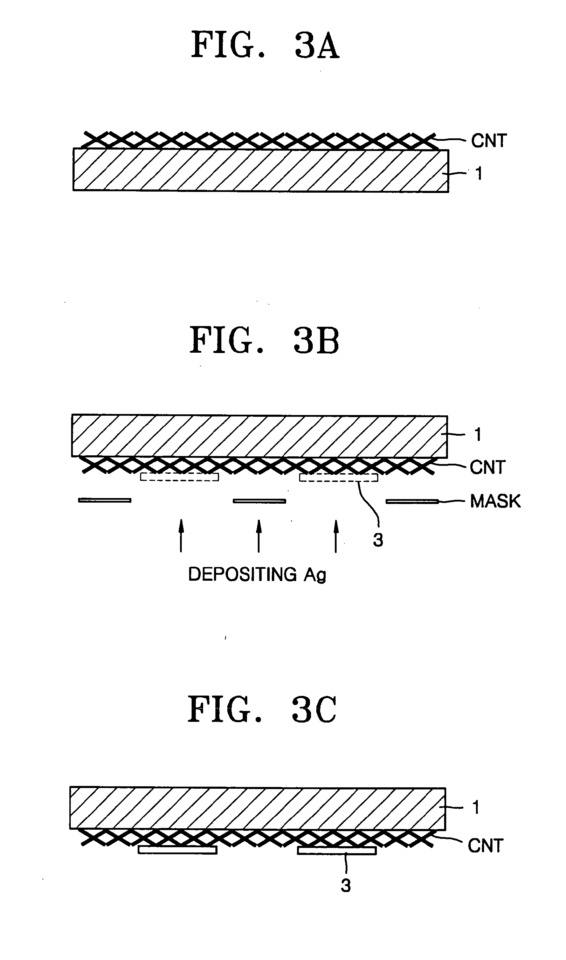

FIGS. 3A through 3F are cross-sectional views illustrating a method of manufacturing a CNT emitter of predetermined pattern, according to another embodiment of the present invention.

As shown in FIG. 3A, CNT powder, which has been dispersed in an organic or inorganic solvent, is dispersed on a first substrate 1 and then dried.

As shown in FIG. 3B, a first metal layer 3 with predetermined pattern is formed on a stack of the CNT powder adsorbed on the first substrate 1. Here, the first metal layer 3 is formed of Ag, and a mask is positioned in front of the first metal layer 3 to limit a deposition area.

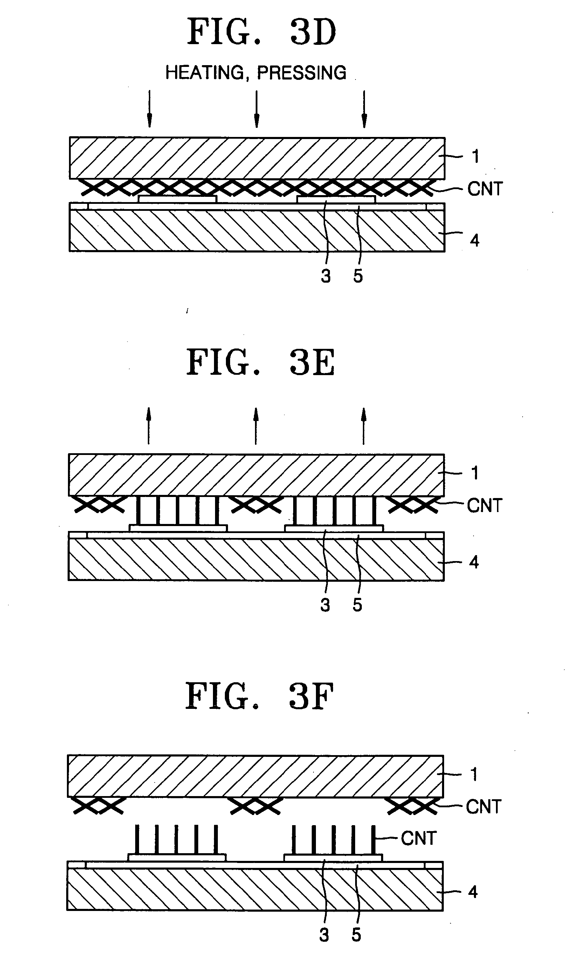

After the first metal layer 3 is completed on the stack of the CNT powder as shown in FIG. 3C, the first substrate 1 is pressed against a second substrate 4 using the previously described method as shown in FIG. 3D. A second metal layer 5, i.e., a cathode, is formed on an upper surface of the second substrate 4, and the first metal layer 3 with predetermined pattern is bonded to the cathode.

As shown in FIG. 3E, the first substrate 1 is perpendicularly spaced apart from the second substrate 4 to tens CNTs therebetween, so that the CNTs are perpendicular to the second substrate 4. The tensed CNTs, i.e., the CNTs perpendicular to the first substrate 1, are CNTs on which the first metal layer 3 has been formed, and the rest of the CNTs remain on the inside surface of the first substrate 1.

As shown in FIG. 3F, the first substrate 1 is further spaced apart from the second substrate 4 to separate the CNTs 1 from the first substrate 1 using a molecular force.

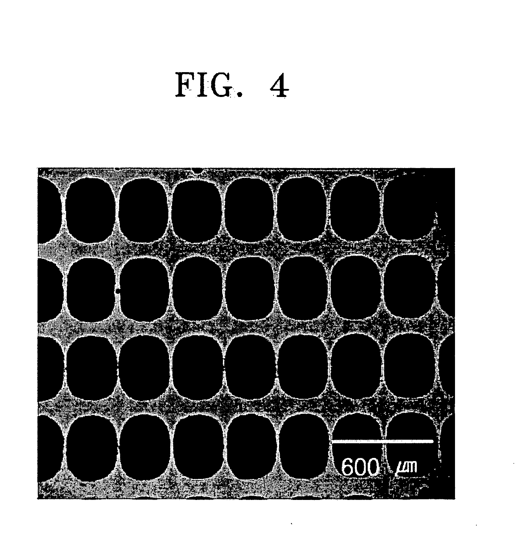

FIG. 4 is a SEM image illustrating CNT emitters formed on a second substrate, according.to an embodiment of the present invention. In a method of manufacturing CNT emitters according to the present invention, the CNT emitters can be perpendicularly arranged without being grown, and in particular, CNTs can be transferred to the second substrate with a desired pattern due to a pattern of a first metal layer.

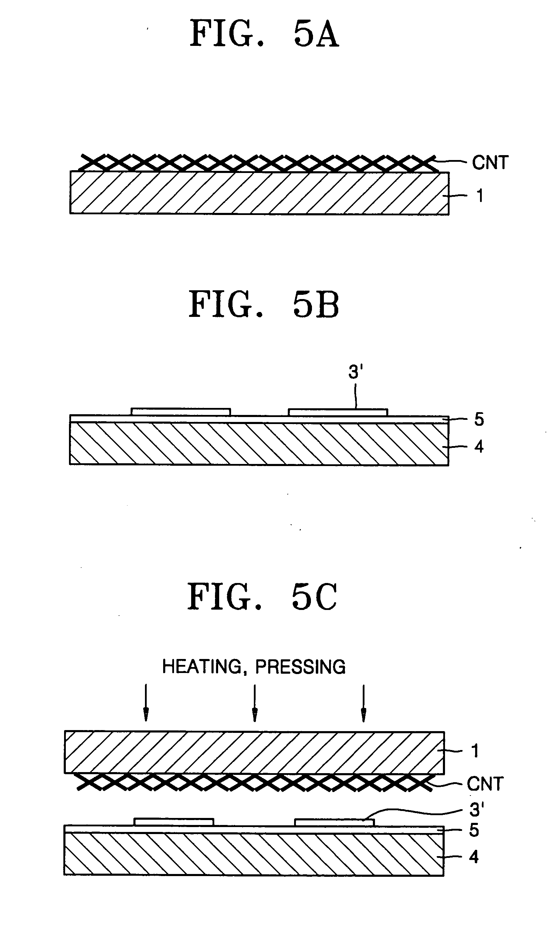

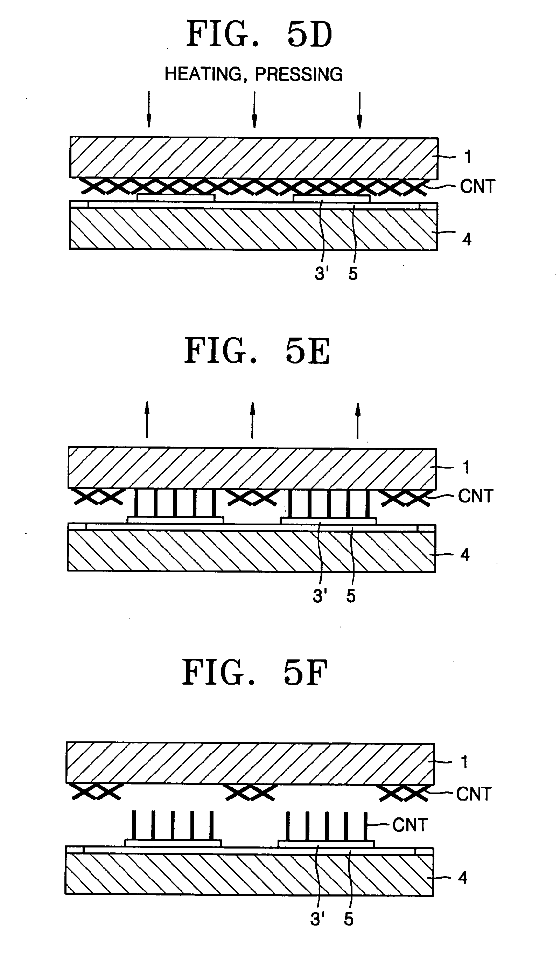

FIGS. 5A and 5F are cross-sectional views illustrating a method of manufacturing CNT emitters with a predetermined pattern, according to still another embodiment of the present invention.

As shown in FIG. 5B, a second metal layer 5, i.e., a cathode, is formed on the surface of a second substrate 2. Next, a metallic bonding layer with a predetermined pattern, i.e., a first metal layer 3', is formed on the second metal layer 5. The first metal layer 3' is formed of a material for bonding CNTs by pressing, for example, Ag.

When a surface of the first substrate 1 on which CNTs are formed faces the surface of the second substrate 4 on which the first and second metal layers 3' and 5 are formed as shown in FIG. 5C, the first substrate 1 and the second substrate 4 are pressed together using the previously described method as shown in FIG. 5D. The CNTs adsorbed on the surface of the first substrate 1 are bonded to the first metal layer 3' formed on the second substrate 4. Here, the CNTs are not bonded to regions where the first metal layer 3' has not been formed.

As shown in FIG. 5E, the first substrate 1 is perpendicularly spaced apart from the second substrate 4 to tense the CNTs therebetween, so that the CNTs are perpendicular to the second substrate 4. Here, the tensed CNTs, i.e., the CNTs perpendicular to the first substrate 1, are CNTs bonded to the first metal layer 3', and the remaining CNTs remain on the inside surface of the first substrate 1.

As shown in FIG. 5F, the first substrate 1 is further spaced apart from the second substrate 4 to separate the CNTs from the first substrate 1 using a molecular force.

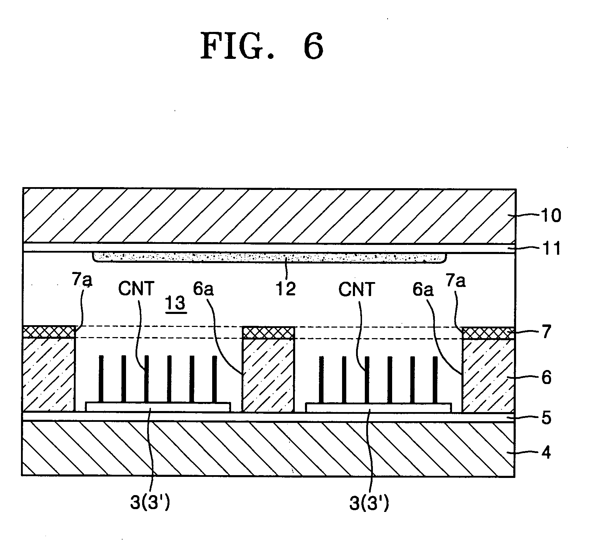

FIG. 6 is a schematic cross-sectional view of a CNT field emission device, according to an embodiment of the present invention. Referring to FIG. 6, a rear plate 4 (the second substrate 4 in the above-described process) is spaced apart from a front plate 10. A vacuum space 13 in which electrons move is formed between the rear plate 4 and the front plate 10.

An anode 11 is formed on the surface of the front plate 10 facing the rear plate 4, and a fluorescent layer 12 is formed on the anode 11. A cathode 5 (the second metal layer 5 in the above-described process) is formed on the surface of the rear plate 4 facing the front plate 10. A gate insulating layer 6 having throughholes 6a is formed on the cathode 5 so as to be opposed to the anode 11. A gate electrode 7 having gate holes 7a corresponding to the throughholes 6a is formed on the gate insulating layer 6.

CNTs which are perpendicularly arrayed are provided at the bottoms of the throughholes 6a. The CNTs are bonded to a metallic boning layer 3 (3') (the first metal layer 3 or 3' in the above-described processes) bonded to the surface of the anode 5.

A method of manufacturing a CNT field emission device having the above-described structure is performed according to conventional processes except for processes of forming an anode and CNTs on the rear plate 4, i.e., the above-described method of manufacturing CNT emitters. In other words, CNT emitters are formed above the rear plate 4 using the above-described method, and then a gate insulating layer, a gate electrode, and the like are formed. If necessary, the anode 5 and the gate insulating layer 6 may be formed on the rear plate 4, and then the CNT emitter may be formed.

The present invention may be applied to the manufacturing of a backlight device of an inactive light emitting display such as an LCD. The backlight device manufactured according to the present invention has the same structure as a general backlight device. However, an electron emitter used for exciting a fluorescent substance is manufactured according to a method of manufacturing a CNT emitter as described above.

As described above, in a method of manufacturing a CNT field emission device, according to the present invention, CNT emitters can be manufactured perpendicularly to a substrate without using high temperature CVD. Moreover, since besides an organic solvent, an organic or inorganic binder is not used, the CNT emitters can be highly pure. Thus, the CNT emitters can have a predetermined pattern in a large area without being limited by the size of the substrate, which is limited when using CVD. Also, since CVD is not adopted, high-priced equipment is not necessary. As a result, the CNT emitters can be manufactured at a relatively low cost. When CNT emitters manufactured using CVD require subsequent processes such as an activation process. However, in the present invention, such subsequent processes are not necessary. Furthermore, the CNT emitters can be manufactured at a low temperature. Thus, a thermal impact on the substrate and the other components caused by a high temperature process can be reduced.

In particular, in the CNT emitters of the present invention, CNTs can be bonded to a cathode by a bonding material having high conductivity. Thus, the CNT emitters can have good electric characteristics and emit electrons from most of the CNTs. As a result, a uniform current can be generated.

The method of manufacturing the CNT emitter according to the present invention can be applied to various fields. For example, the method of the present invention can be applied to a FED, a flat lamp, an electron emitter, and so forth. The method of the present invention may be independently performed or may be generally included in processes used in the various fields.

## Claims

1. A method of manufacturing carbon nanotube emitters, comprising:
adsorbing powdered carbon nanotubes onto a first substrate;
depositing a metal on the carbon nanotubes to form a first metal layer on a stack of the carbon nanotubes;
forming a second metal layer on a second substrate;
pressure-bonding the first metal layer on the first substrate to the second metal layer on the second substrate;
spacing the first substrate apart from the second substrate to tense the carbon nanotubes that are bonded to the second substrate by the first and second metal layers; and
further spacing the first substrate apart from the second substrate to separate the carbon nanotubes from the first substrate.

2. The method of claim 1, wherein the adsorption of the carbon nanotubes onto the first substrate comprises:
mixing the powdered carbon nanotubes with a liquid dispersing agent;
coating the first substrate with the dispersed carbon nanotubes; and
removing the liquid dispersing agent to adsorb the carbon nanotubes onto the first substrate.

3. The method of claim 2, wherein the liquid dispersing agent is one of organic and inorganic solvents.

4. The method of claim 3, wherein the organic solvent is ethanol.

5. The method of any one of claims 1 through 4, wherein in the bonding of the first and second metal layers, the first and second metal layers are heated to a predetermined temperature.

6. The method of claim 5, wherein the first metal layer is formed in a predetermined pattern by adopting a depositing method using a mask.

7. The method of claim 1, wherein the first metal layer is formed in a predetermined pattern by adopting a depositing method using a mask.

8. A method of manufacturing a carbon nanotube emitter, comprising:
adsorbing powdered carbon nanotubes onto a first substrate;
forming a second metal layer on a second substrate;
forming a first metal layer, which is bonded to the carbon nanotubes, in a predetermined pattern on the second metal layer;
pressing the carbon nanotubes on the first substrate to bond the carbon nanotubes to the first metal layer;
spacing the first substrate apart from the second substrate to tense the carbon nanotubes that are bonded to the second substrate by the first metal layer; and
further spacing the first substrate from the second substrate to separate the carbon nanotubes from the first substrate.

9. The method of claim 8, wherein the adsorption of the carbon nanotubes on the first substrate comprises.
mixing the powdered carbon nanotubes with a liquid dispersing agent;
coating the first substrate with the dispersed carbon nanotubes; and
removing the liquid dispersing agent to adsorb the carbon nanotubes onto the first substrate.

10. The method of claim 9 wherein the liquid dispersing agent is one of organic and inorganic solvents.

11. The method of claim 10, wherein the organic solvent is ethanol.

12. The method of any one of claims 8 through 11, wherein in the bonding of the first and second metal layers, the first and second metal layers are heated to a predetermined temperature.

13. The method of claim 8, wherein the first metal layer is formed in a predetermined pattern on the second metal layer.

14. A method of manufacturing a carbon nanotube field emission device comprising a front plate comprising an inside surface on which an anode is formed, a rear plate which is spaced apart from the front plate and comprises an inside surface on which a cathode is formed, and electron emitters which are formed of carbon nanotubes on the cathode, the method comprising:
forming the cathode on the inside surface of the rear plate, the rear plate acting as a second substrate; and
manufacturing carbon nanotube emitters using a method according to any of claims 1 to 13 using an additional stamp substrate as the first substrate.

15. A method of manufacturing a carbon nanotube field emission device comprising a front plate comprising an inside surface on which an anode is formed, a rear plate which is spared apart from the front plate and comprises an inside surface on which a cathode is formed, and electron emitters formed of carbon nanotubes on the cathode, the method comprising:
manufacturing carbon nanotube emitters using a method according to any of claims 1 to 13, the rear plate acting as the first substrate and an additional stamp substrate acting as the second substrate.
